# EUROPÄISCHE PATENTSCHRIFT

(11) **EP 1 721 798 B1**
(45) Veröffentlichungstag und Bekanntmachung des Hinweises auf die Patenterteilung: **25.02.2009**
(21) Anmeldenummer: 06007940.7
(22) Anmeldetag: 15.04.2006
(51) Int. Cl.: B60T 10/02

(54) **Pumpenantrieb für die Pumpe eines Retarders**
Pump drive for retarder pump
Entrainement de pompe pour pompe d'un ralentisseur

(30) Priorität: 14.05.2005 DE 102005022455
(43) Veröffentlichungstag der Anmeldung: 15.11.2006
(73) Patentinhaber: ZF Friedrichshafen AG, 88038 Friedrichshafen (DE)
(72) Erfinder: Buri, Gerhard, 88677 Markdorf (DE); Sauter, Frank, 88074 Meckenbeuren (DE); Grupp, Bernhard, 88250 Weingarten (DE)

(56) Entgegenhaltungen:
- EP-A- 0 716 966
- DE-A1- 10 140 220
- DE-A1- 10 321 279
- DE-A1- 19 833 892

## Beschreibung

Die vorliegende Erfindung betrifft einen Pumpenantrieb für die Pumpe eines Retarders, gemäß dem Oberbegriff des Patentanspruchs 1.

Neben den Betriebsbremsen eines Fahrzeugs, insbesondere eines Nutzfahrzeugs, die im Regelfall einem Verschleiß unterliegende Reibungsbremsen sind, werden zusätzliche Verzögerungseinrichtungen mehr und mehr auch vom Gesetzgeber gefordert und von den Fahrzeugherstellern angeboten.

Derartige verschleißfreie zusätzliche Verzögerungseinrichtungen in Form von Retardem und Motorbremsen können dazu verwendet werden, die Fahrzeuggeschwindigkeit im Gefälle konstant zu halten.

Zu den Retardem werden sowohl zusätzlich am Getriebe angeordnete hydrodynamische, hydrostatische oder elektrodynamische Bremseinrichtungen gezählt, sowie auch Systeme, die in Form eines "Intarders" innerhalb des Getriebegehäuses vorgesehen sind.

Retarder werden bei Nutzfahrzeugen vor allem eingesetzt, um die beispielsweise bei Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauemder Bergabfahrt.

Bei hydrodynamischen Retardem wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluss befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt und beschleunigt, welches sich dann am Stator abstützt, wodurch eine Bremswirkung auf die Rotorwelle erzeugt wird.

Aus der DE 198 33 892 A1 der Anmelderin ist ein hydrodynamischer Retarder für ein Kraftfahrzeug bekannt, bei dem der Ölkreislauf einen Speicher, eine Pumpe, ein Umschaltventil und eine Steueranordnung aufweist und zum Druckabbau während des Retarderbetriebs ein Ventil zwischen dem Speicher und dem Retarder vorgesehen ist.

Aus der DE 101 40 220 A1 der Anmelderin ist ein hydrodynamischer Retarder für ein Kraftfahrzeug bekannt, bei dem die Hydraulikpumpe des Kreislaufs zur Steuerung des Retarders durch einen Elektromotor antreibbar ist.

Bei den bekannten Retardern wird die üblicherweise koaxial zum Rotor angeordnete Retarderpumpe über eine Zweiflach-Kupplung angetrieben, welche sowohl bei Vorwärts- als auch bei Rückwärtsfahrt des Fahrzeugs im Eingriff ist, so dass der Einsatz von leistungsoptimierten Pumpen, die nur in einer Richtung antreibbar sind, nicht möglich ist.

Der vorliegenden Erfindung liegt die Aufgabe zugrunde, einen Pumpenantrieb für einen Retarder anzugeben, bei dem leistungsoptimierte Pumpen, die nur in einer Richtung antreibbar sind, verwendet werden können.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Pumpenantrieb für die Pumpe eines Retarders vorgeschlagen, wobei die Pumpe vom Rotor des Retarders angetrieben wird, bei dem eine nur in eine Drehrichtung, nämlich in Vorwärtsfahrtrichtung schaltende Kupplung mit formschlüssiger oder reibschlüssiger Verbindung vorgesehen ist, die zwischen der Pumpe und dem Rotor angeordnet ist.

Vorzugsweise ist zwischen der Pumpe und dem Rotor ein in eine Drehrichtung, die der Vorwärtsfahrtrichtung entspricht, sperrender Freilauf vorgesehen. Freiläufe sind Maschinenelemente, deren Antriebs- und Abtriebsteile in einer Drehrichtung, d.h. in Leerlaufdrehrichtung gegeneinander frei beweglich sind, während sie in der anderen Drehrichtung, auch Sperrrichtung genannt, gegeneinander reibschlüssig oder formschlüssig verriegeln.

Im Rahmen einer bevorzugten Ausführungsform der Erfindung kann der Freilauf als Rastklinken-Freilauf ausgebildet sein.

Durch die erfindungsgemäße Konzeption ist sichergestellt, dass die Pumpe nur bei Vorwärtsfahrt aktiv ist. Bei Rückwärtsfahrt wird die Pumpe nicht angetrieben, so dass ein Missbrauch oder eine eventuelle Beschädigung bzw. Zerstörung der Pumpe vermieden wird. In vorteilhafter Weise aktiviert und deaktiviert sich die erfindungsgemäß verwendete Kupplung mechanisch selbstständig, zuverlässig und sicher.

Des weiteren kann die erfindungsgemäß verwendete Kupplung auch mit einer quemachgiebigen Kupplung kombiniert werden, um auf diese Weise eine parallele radiale Achsverschiebung sowie kleinere axiale Verschiebungen auszugleichen, wobei als quernachgiebige Kupplung beispielsweise eine Kreuzscheibe verwendet werden kann, die einerseits mit zwei Fingern in Nuten der antreibenden Mitnehmerscheibe eingreift, wobei andererseits der als Zweiflach ausgebildete Wellenstummel der Pumpenwelle in einen um 90° zu den Fingern verdrehten Schlitz der Kreuzscheibe eingreift.

Dadurch kann die mittels eines Sicherungsringes axial in der Mitnehmerscheibe gesicherte Kreuzscheibe sich nur längs der Nuten in der Mitnehmerscheibe bewegen, während sich die Pumpenmitnahme im Schlitz der Kreuzscheibe quer dazu bewegen kann.

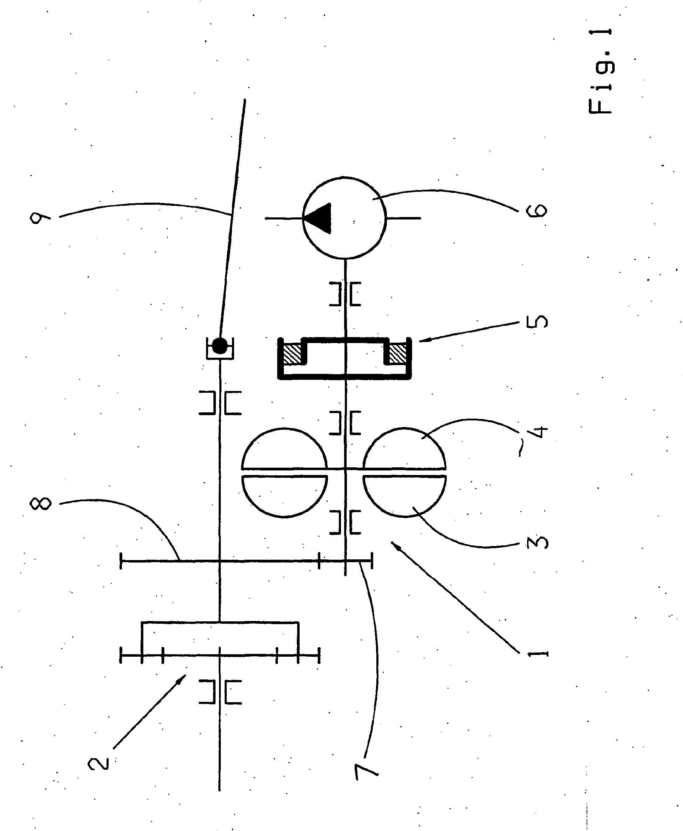

Die Erfindung wird im Folgenden anhand der beigefügten Figur, welche den erfindungsgemäßen Pumpenantrieb schematisch darstellt, beispielhaft näher erläutert.

In der Figur ist ein Retarder 1 eines Getriebes 2 dargestellt. Er umfasst einen über ein Ritzel 7 mit einem Hochtreiber 8 verbundenen Stator 3 und einen Rotor 4, wobei der Rotor 4 über eine Kupplung 5 mit der Pumpe 6 bzw. der Pumpenwelle lösbar verbunden ist. Ebenfalls in der Figur dargestellt ist die Gelenkwelle 9. Gemäß einer besonders vorteilhaften Ausführungsform der Erfindung ist als Kupplung zwischen der Pumpe 6 und dem Rotor 4 bzw. zwischen der Rotorwelle und der Pumpenwelle ein in eine Drehrichtung, die der Vorwärtsfahrtrichtung entspricht, sperrender Freilauf 5 vorgesehen.

Auf diese Weise kann eine leistungsoptimierte Pumpe, die nur in einer Richtung antreibbar ist, als Retarderpumpe eingesetzt werden, da diese nur bei Vorwärtsfahrt aktiv ist, wobei die Gefahr einer Beschädigung der Pumpe bei Rückwärtsfahrt vermieden wird, da in diesem Fall die Pumpe nicht angetrieben wird.

Selbstverständlich fällt auch jede konstruktive Ausbildung, insbesondere jede räumliche Anordnung der Elemente des erfindungsgemäßen Pumpenantriebs für die Pumpe eines Retarders an sich sowie zueinander und soweit technisch sinnvoll, unter den Schutzumfang der vorliegenden Ansprüche, ohne die Funktion des Pumpenantriebs, wie sie in den Ansprüchen angegeben ist, zu beeinflussen, auch wenn diese Ausbildungen nicht explizit in der Figur oder in der Beschreibung dargestellt sind.

### Bezugszeichen

- 1: Retarder
- 2: Getriebe
- 3: Stator
- 4: Rotor
- 5: Kupplung, Freilauf
- 6: Pumpe
- 7: Ritzel
- 8: Hochtreiber
- 9: Gelenkwelle

## Patentansprüche

1. Pumpenantrieb für die Pumpe eines Retarders (1), wobei die Pumpe (6) vom Rotor (4) des Retarders (1) angetrieben wird, **dadurch gekennzeichnet, dass** zwischen dem Rotor (4) und der Pumpe (6) eine nur in eine Drehrichtung, nämlich in Vorwärtsfahrtrichtung schaltende Kupplung (5) mit formschlüssiger oder reibschlüssiger Verbindung angeordnet ist, derart, dass die Pumpe (6) bei Rückwärtsfahrt nicht angetrieben wird.

2. Pumpenantrieb für die Pumpe eines Retarders nach Anspruch 1, **dadurch gekennzeichnet, dass** als Kupplung ein in Vorwärtsfahrtrichtung sperrender Freilauf (5) vorgesehen ist.

3. Pumpenantrieb für die Pumpe eines Retarders nach Anspruch 2, **dadurch gekennzeichnet, dass** der Freilauf (5) als Rastklinken-Freilauf ausgebildet ist.

## Claims

1. Pump drive for the pump (6) of a retarder (1), with the pump (6) being driven by the rotor (4) of the retarder (1), **characterized in that** a positive or frictional clutch (5) shifting in one direction only, namely in forward driving direction, is arranged between the rotor (4) and the pump (6) in such a manner that the pump (6) is not driven during rearward driving.

2. Pump drive for the pump of a retarder according to claim 1, **characterized in that** a sprag clutch (59) locking in forward driving direction is provided as a clutch.

3. Pump drive for the pump of a retarder according to claim 2, **characterized in that** the sprag clutch (5) is designed as a ratchet-type sprag clutch.

## Revendications

1. Entraînement de pompe pour la pompe (6) d'un ralentisseur (1), sachant que la pompe (6) est entraînée par le rotor (4) du ralentisseur (1), **caractérisé en ce que** entre le rotor (4) et la pompe (6) est disposé un embrayage (5) avec liaison de forme ou par friction et enclenchable uniquement dans un sens de rotation, à savoir dans le sens de marche avant, de façon à ce que la pompe (6) n'est pas entraînée en marche arrière.

2. Entraînement de pompe pour la pompe d'un ralentisseur selon la revendication 1, **caractérisé en ce que** en tant qu'embrayage est prévue une roue libre (5) se verrouillant dans la direction de marche avant.

3. Entraînement de pompe pour la pompe d'un ralentisseur selon la revendication 2, **caractérisé en ce que** la roue libre (5) est réalisée en tant que roue libre à cliquet d'arrêt.
